# EUROPEAN PATENT APPLICATION

(11) **EP 0 546 491 A1**
(43) Date of publication of application: **16.06.1993**
(21) Application number: 92120869.0
(22) Date of filing: 08.12.1992
(51) Int. Cl.: A01K 23/00, A01K 1/01, B65D 33/28, B65B 67/12

(54) **Pack for collection and disposal of animal excrements, especially of dogs**

(30) Priority: 12.12.1991 IT GE910167
(71) Applicant: Sciallero, Bruna, I-16132 Genova (IT)
(72) Inventor: Sciallero, Bruna, I-16132 Genova (IT)
(74) Representative: Ferrarotti, Giovanni

(57) **Abstract**

The pack is consisting of a usually circular flat base (1), provided with a peripheral recess (2) in which two elastic strings (3, 4) are threaded , both protruding from the recess (2) at opposite ends. The animal evacutates its droppings on the flat base (1) and the user then pulls the strings to form a bag which he can throw away.

## Description

As known, in most towns people are well conscious of the problem of domestic animal droppings, especially of dogs which soil the side-walks.

Municipalities ask dog masters to remove these droppings but this request is not acted on because the problem is hard to be solved.

Many devices are known, including various types of pans, pliers, and bags to collect thes excrements, but obviously such devices are not easy to carry and to use.. In addition these devices have the serious drawback that the excrements have to be removed when they have already been dropped , so that their removal may be difficult difficult and there is the risk that they may break up ; after their removal the sidewalk remains soiled

This invention has the aim to provide an easy and practical pack to collect the excrements while the animal drops them so that they immediately can be disposed of..

According to this invention, such pack is consisting of a flat, usually circular sheet, provided along its outer edge with a tubular recess in which two annular strings are trheaded; each string is protruding from opposite ends od thwe recess. The sheet is placed on the ground and the dog shall be taught to defecate on this sheet. Thus by pulling both strings in opposite directions a disposable bag is obtained.

It is necessary only to get the animal accustomed to defecate on the sheet placed on ground but this problem can be easily solved by training the dog to do so.

The invention in question (subject matter of this Patent) is illustrated in its practical and exemplifying implementation in the enclosed drawing, in which:
Fig. 1 shows a top view of the pack in question placed on the ground.
Fig. 2 shows a X-X longitudinal section of the pack illustrated in Fig. 1.
Fig. 3 shows a Y-Y longitudinal section of the pack illustrated in Fig. 1.
Fig. 4 shows a perspective view of the pack containing droppings when the strings are pulled.
Fig. 5 shows a perspective view of the disposable bag.

The figures 6 and 7 show special solutions for the string recess.

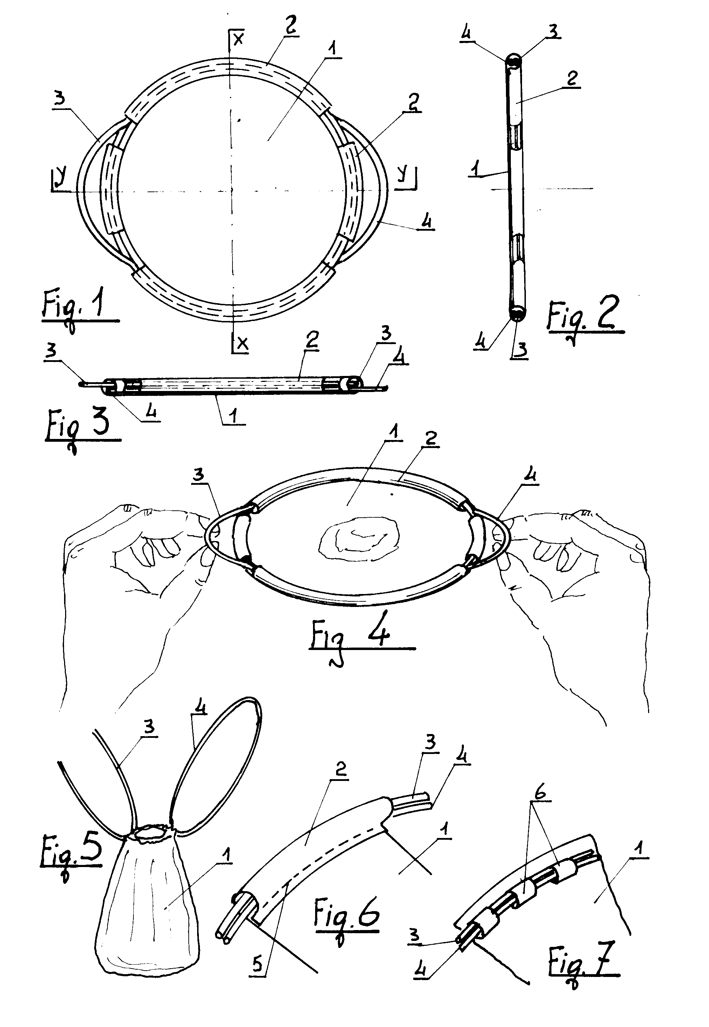

With reference to these figures, the base sheet (1) has an annular recessed edge (2) containing two annular strings (3, 4). Each string (3, 4) protrudes from the recess on diametrically opposite sides so, after the dog has defectaed, the user can pull these strings with his fingers as illustrated in the fig. 4 so as to form a disposable bag as illustrated in Fig. 5.

Usuallly the base sheet (1) has a circular shape, but it can have other shapes, such as elliptical for instance.

The base (1) can be in plastic material or possibly waterproof fabric.

The strings (3, 4) shall be strong and elastic such as elastic plastic twine or harmonic metal wired so that the pack can be folded before use and elastically opened when it is put down on the ground.

The recess (2) may be obtained by folding the edge of the sheet inwards arid by fixing it by . sewing or seaming or welding (5) the edge of the base (1) as illustrated in fig. 6.

The recess 2 may also be formed by small rings peripherally spaced and glued onto the edge of the sheet (1) as shown in fig. 7.

The external part of the strings (3, 4) may be rather long to allow the user in erect position to keep the strings.in his hands. This design feature may also be useful to move the along the ground and to place it in a proper position for defecation .

As an alternative, additional strings or wires, even if not elastic, may be provided to be fixed to the protruding part of the strings (3, 4) as already described so that the user, also in this case, can move or close the pack while in erect position..

Three strings may be provided too, one of which has to be elastic to create the opening of the pack at ground and the other two strings that need not be elastic, to form the disposable bag i.e. with about the same function as already mentioned for the above described strings (3, 4).

The above description fully highlights the usefulness of the pack, subject matter of this invention and its convenience to collect domestic animal droppings.

## Claims

1. Pack to collect and remove animal excrements, in particular of dogs, characterized by the fact that it is consisting of a usually flat base (1) edged by a peripheral recess (2) and that it is provided with two strings (3, 4) threaded in this recess (2) each of which is protruding from this recess at diametrically opposite ends so that the dog can defectate on the base sheet (1) and his master can form a disposable bag by pulling the opposite strings (3, 4).

2. Pack as described in claim 1, characterized by the fact that the flat base (1) may be in plastic material or waterproof fabric.

3. Pack as described in claim 1, characterized by the fact that the strings (3, 4) may be consist of elastic plastic or metal wires, so that the pack can be easily folded during transportation and can be opened automatically when placed on the ground before use.

4. Pack as described in claim 1, characterized by the fact that the recess (2) is obtained by folding and fixing the fold by seaming or welding (5) the edge of the flat base (1).

5. Pack as described in claim 1, characterized by the fact that the recess (2) is obtained by spaced rings (6) fixed along the outer edge of the flat base (1)

6. Pack as described in claim 1, characterized by the fact that the strings (3, 4) are rather long so as to allow the user in erect position to handle them.

7. Pack as described in claim 1, characterized by the fact that additional strings or wires which need not be elastic, can be fixed to the protruding part of the strings (3, 4) so as to allow the user to move or to close the pack while standing in erect position.

8. Pack as described in claim 1, characterized by the fact that the recess (2) contains three strings one of which has to be elastic to permit automatic opening of the pack on ground and the other two, which need not be elastic, to allow the user to close the pack as a bag.
